# EUROPEAN PATENT APPLICATION

(11) **EP 4 473 844 A1**
(43) Date of publication of application: **11.12.2024**
(21) Application number: 23749694.8
(22) Date of filing: 27.01.2023
(51) Int. Cl.: A23L 7/10

(54) **PROCESSED CEREAL PRODUCT, PRODUCTION METHOD FOR PROCESSED CEREAL PRODUCT, PRODUCTION METHOD FOR COOKED RICE?LIKE FOOD PRODUCT, AND COOKED RICE?LIKE FOOD PRODUCT**

(30) Priority: 01.02.2022 JP 2022014151
(71) Applicant: Nippon Food Manufacturer Co., Sapporo-shi, Hokkaido, 063-0841 (JP)
(72) Inventor: TOBE, Ken Luis, Sapporo-shi Hokkaido 063-0841 (JP)
(74) Representative: Wasner, Marita
(86) International application number: PCT/JP2023/002685
(87) International publication number: WO 2023/149378

(57) **Abstract**

This processed cereal product has the characteristics listed in a) through e). This processed cereal product is for preparing a cooked rice-like food product by adding water and then heating and cooking the processed cereal product. a) Obtained by steaming, rolling, and cutting hulled and milled cereal; b) has a thickness of 0.4-1.2 mm; c) has a moisture value of no higher than 20%; d) the cooked rice-like food product contains substantially no cereal source other than the processed cereal product; and e) the cooked rice-like food product has approximately the same appearance, texture, and consistency as cooked rice.

## Description

### TECHNICAL FIELD

The present invention relates to a processed grain food material, a method for producing a processed grain food material, a method for producing a cooked rice-like meal, and a cooked rice-like meal.

### BACKGROUND ART

Cooked rice generally means rice which has been cooked in a rice cooker or the like and in which starch contained therein has been gelatinized, and is generally called "cooked rice". Although cooked rice has been traditionally eaten in Japan, it is one of important staple foods in the present day.

In Japan before the World War II, refined white rice was valuable and expensive, and thus "barley rice" and the like in which rice is mixed with inexpensive barley and cooked were the mainstream. Since barley is rich in dietary fiber, Japanese have been able to take in a large amount of dietary fiber from grain. However, in the high growth period after the war, as the polishing technique has advanced and refined white rice has been generally eaten as staple food, the demand for barley rich in dietary fiber has decreased, and as a result, the opportunity to take in dietary fiber from the staple food has decreased.

In recent years, "oatmeal", which is processed oat, has attracted attention as staple food. Since oatmeal is rich in dietary fiber and other nutrients, demand for oatmeal is expanding as a healthy food or a dietetic food.

Oatmeal is generally eaten as porridge, but as a more familiar way of eating for Japanese, a method of "making oatmeal into rice-like meal" in which oatmeal is cooked so as to have a texture like cooked rice (cooked rice) has been proposed (Non Patent Literatures 1 and 2).

In general, oatmeal prepared as rice-like meal is made by a method of mixing rolled type oatmeal obtained by flaking oats without cutting and instant type oatmeal (or quick cooking) obtained by finely cutting whole grains, adding water thereto, and heating the mixture in a microwave oven or the like. The rolled type oatmeal is thick and not cut, and thus has a texture like rice but has no glutinous texture. On the other hand, the instant type oatmeal is cut and extremely thinly flaked, and thus has no texture of rice but has glutinous texture. Therefore, in order to simulate Japanese cooked rice having both the texture and glutinous texture of rice, it is necessary to mix two types of rolled type oatmeal and instant type oatmeal.

### CITATIONS LIST

### NON-PATENT LITERATURE

Non Patent Literature 1: Diet Recipe for Oatmeal Prepared as Rice-like Meal, the author Korezou, supervised by Nina Ishihara, Gakken Plus Co., Ltd.
Non Patent Literature 2: Stomach-filling Healthy Recipe for Oatmeal Prepared as Rice-like Meal, the author Korezou, Gakken Plus Co., Ltd.

### SUMMARY OF INVENTION

### TECHNICAL PROBLEMS

However, when oatmeal is made into rice-like meal in order to simulate cooked rice familiar to Japanese, it is necessary to mix two types of rolled type oatmeal and instant type oatmeal, which takes time and cost. In addition, since the rolled type oatmeal and instant type oatmeal are not originally specialized for the purpose of cooking for simulating cooked rice, there is a limit to simulating the appearance, texture, and glutinous texture of the cooked rice, and it is also difficult to adjust the appearance, texture, and glutinous texture to desired degrees.

The present invention has been made in view of the above circumstances, and an object of the present invention is to provide a processed grain food material for preparing a cooked rice-like meal, which is specialized in simulating the appearance, texture, and glutinous texture of cooked rice, and a method for producing the same, and a cooked rice-like meal which has an appearance, texture, and glutinous texture similar to those of cooked rice and does not substantially contain a grain source other than the processed grain food material, and a method for producing the same.

### SOLUTIONS TO PROBLEMS

In order to achieve the above object, a processed grain food material according to a first aspect of the present invention is a processed grain food material for preparing a cooked rice-like meal by adding water to the processed grain food material and cooking the processed grain food material by heating, the processed grain food material having the following features a) to e):
a) the processed grain food material being obtained by steaming, flaking, and cutting grain that has been shed and polished;
b) the processed grain food material having a thickness of 0.4 to 1.2 mm;
c) the processed grain food material having a moisture content of 20% or less;
d) the cooked rice-like meal containing substantially no grain source other than the processed grain food material; and
e) the cooked rice-like meal having an appearance, a texture, and a glutinous texture similar to an appearance, a texture, and a glutinous texture of cooked rice.

A method for producing a processed grain food material according to a second aspect of the present invention includes:
a steaming step of steaming grain that has been shed and polished;
a flaking step of flaking the grain steamed in the steaming step to a thickness of 0.4 to 1.2 mm; and
a step of drying the grain flaked in the flaking step to obtain a processed grain food material having a moisture content of 20% or less, wherein
the grain dried is cut, or
in the steaming step, the grain that has been shed and polished is cut, and then steamed.

For example, the grain is cut into 2 to 15 pieces.

A method for producing a cooked rice-like meal according to a third aspect of the present invention includes:
a step of adding water to the processed grain food material according to the first aspect of the present invention, and cooking the processed grain food material by heating, wherein
the cooked rice-like meal contains substantially no grain source other than the processed grain food material, and has an appearance, a texture, and a glutinous texture similar to an appearance, a texture, and a glutinous texture of cooked rice.

A cooked rice-like meal according to a fourth aspect of the present invention includes the processed grain food material according to the first aspect of the present invention, wherein
the cooked rice-like meal contains substantially no grain source other than the processed grain food material, and has an appearance, a texture, and a glutinous texture similar to an appearance, a texture, and a glutinous texture of cooked rice.

### ADVANTAGEOUS EFFECTS OF INVENTION

According to the present invention, it is possible to provide a processed grain food material for preparing a cooked rice-like meal, which is specialized in simulating the appearance, texture, and glutinous texture of cooked rice, and a method for producing the same, and a cooked rice-like meal which has an appearance, texture, and glutinous texture similar to those of cooked rice and does not substantially contain a grain source other than the processed grain food material, and a method for producing the same.

### BRIEF DESCRIPTION OF DRAWINGS

Fig. 1 illustrates diagrams exemplifying a production processes of a processed grain food material used for the cooked rice-like meal of the present invention. Fig. 1(a) is a diagram illustrating a production process of a processed grain food material obtained using oats (process of cutting after drying). Fig. 1(b) is a view illustrating a production process of a processed grain food material obtained using oats (process of cutting between shedding/polishing and steaming).
Fig. 2 is a photograph of cooked rice which is a cooked rice-like meal of the present example.
Fig. 3 is a photograph of a rice ball which is a cooked rice-like meal of the present example.
Fig. 4 is a photograph of fried rice which is a cooked rice-like meal of the present example.

### DESCRIPTION OF EMBODIMENTS

### (1. Method for producing processed grain food material)

A method for producing a processed grain food material of the present invention includes:
a steaming step of steaming grain that has been shed and polished;
a flaking step of flaking the grain steamed in the steaming step; and
a step of drying the grain flaked in the flaking step to obtain a processed grain food material, wherein
the grain dried is cut, or
in the steaming step, the grain that has been shed and polished is cut, and then steamed.

The case where the grain having been flaked in the flaking step described above is cut is referred to as a "first production method" herein. The process order of the first production method is as follows.

### Shedding → polishing → steaming → flaking → drying → cutting

The case where in the steaming step described above, the grain having been shed and polished is cut, and then steamed is referred to as a "second production method" herein. The process order of the second production method is as follows.

### Shedding → polishing → cutting → steaming → flaking → drying

As described later, water is added to the processed grain food material obtained by the method of the present invention, and the processed grain food material is cooked by heating to prepare a "cooked rice-like meal". Herein, the "cooked rice-like meal" is prepared by adding water to the processed grain food material of the present invention and cooking the processed grain food material by heating, and has the following features.
- The cooked rice-like meal does not substantially contain a grain source other than the processed grain food material of the present invention (described later).
- The cooked rice-like meal has an appearance, texture, and glutinous texture similar to those of cooked rice (described later).

Specifically, the "cooked rice-like meal" is a food that is eaten like cooked rice (so-called "cooked rice" (including packed rice)), a rice ball, fried rice, risotto, doria, and the like, and also includes a refrigerated product or a frozen product.

The grain used in the present invention is, for example, grain that can be generally processed into the shape of rolled grains, such as oat, barley, wheat, and brown rice.

In the steaming step described above, the grain having been shed and polished is steamed. Since the grain is made soft and elastic by adding moisture to the grain through steaming, the grain can be rolled out without being crushed by the flaking step described later. Incidentally, the grain may be dried by heating (for example, drying by heating with hot air) for the purpose of stabilizing bran present on the surface of the grain after the polishing, and this drying by heating can be adopted in a case where the grain is temporarily stored or a case where a batch operation is required. In this case, steaming can be performed after the drying by heating. In addition, the grain may be cooled after the steaming, or the moisture and temperature thereof may be adjusted to predetermined degrees.

As a specific method for the steaming, for example, the steaming may be performed under steam (100°C) for several tens of minutes, or may be performed at a temperature of 100°C or more for 30 minutes or more under a pressure of 1 atm or more. The steaming method can be appropriately changed in consideration of the type of the grain, the type of the cooked rice-like meal, and the like.

In the flaking step, the grain having been steamed in the steaming step is flaked to thereby obtain a processed grain food material. Specific examples for the flaking method include a method of causing the grain to pass between heated rollers to thereby flake the grain; and a method of pressing a flat plate such as an iron plate against the grain to thereby flake the grain. The grain is flaked to a thickness of 0.4 to 1.2 mm, and in the range of the thickness of 0.4 to 1.2 mm, a cooked rice-like meal (described later) having a preferable appearance, texture and glutinous texture like cooked rice can be produced.

The grain having been flaked in the flaking step is dried to thereby obtain a processed grain food material. Specific methods for drying include a hot air drying method; a method of roasting the grain on a heated iron plate or the like; a method of drying the grain under reduced pressure; a sun drying method; a natural drying method; and a freeze-drying method. The method can be appropriately selected in consideration of the type of the grain, the type of the cooked rice-like meal, and the like. From the viewpoint of obtaining a cooked rice-like meal (described later) having an appearance, texture, and glutinous texture similar to those of cooked rice, the grain is dried so that the moisture content in the processed grain food material is 20% or less, preferably 150 or less, more preferably 14% or less.

As for the cutting, in the first production method, the grain having been flaked and dried is cut, whereas in the second production method, the grain having been shed and polished is cut, and then steamed in the steaming step. Specific methods for cutting include a method using a cutting blade (cutting machine); a method of smashing the grain against some sort of surface to be crushed, and then sifting the crushed grain; a method of pressing the grain against a sieve. The method can be appropriately selected in consideration of the type of the grain, the type of the cooked rice-like meal, and the like. The grain may be cut into, for example, 2 to 15 pieces. The cut size can be appropriately selected in consideration of the type of the grain, the type of the cooked rice-like meal, and the like. When the grain is cut, for example, in the method using a cutting blade (cutting machine), a case where the grain passes through without being cut because the grain accidentally does not contact the cutting blade may be assumed. However, in the method for producing a processed grain food material of the present invention, the grain obtained by passing through the cutting machine without being cut is not removed.

The processes until the processed grain food material is obtained will be specifically described.

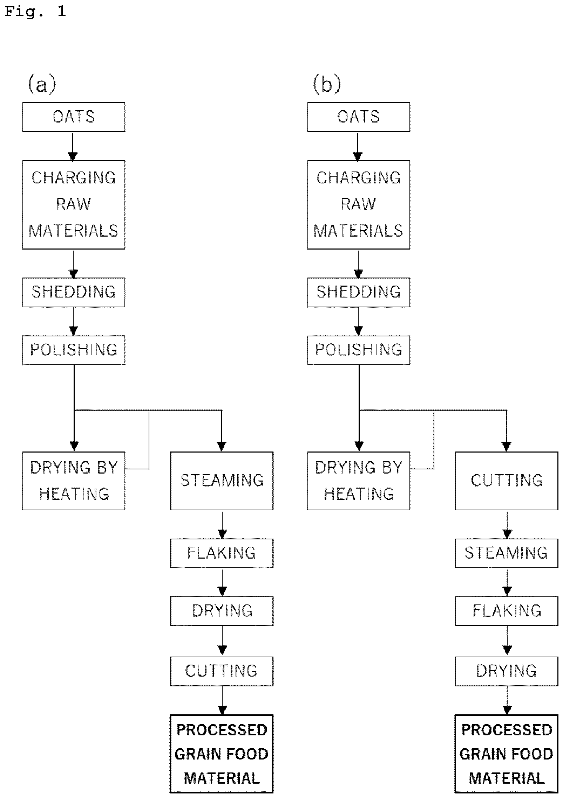

An example of a process of obtaining a processed grain food material using oats (first production method) will be described (Fig. 1(a)). Oats are charged in a shedding machine, the hull thereof is removed (shed), and then the oats are polished by a polishing machine. The oats having been shed and polished are dried by heating, and then steamed at 100°C or higher for several tens of minutes under saturated steam. The steamed oats are flaked to a thickness of 0.4 to 1.2 mm and then dried. The dried oats are each cut into 2 to 4 pieces to obtain a processed grain food material.

An example of another process of obtaining a processed grain food material using oats (second production method) will be described (Fig. 1(b)). Oats are charged in a shedding machine, the hull thereof is removed (shed), and then the oats are polished by a polishing machine. The oats having been shed and polished are cut into 2 to 4 pieces, and then steamed at 100°C or higher for several tens of minutes under saturated steam. The steamed oats are flaked to a thickness of 0.4 to 1.2 mm and then dried to obtain a processed grain food material.

In the first production method, the grain is cut after steaming and flaking. In this case, the surface of the grain has poor water absorbency due to the presence of bran, and water is absorbed only from the cut surface, so that a processed grain food material having low water absorbency can be obtained. On the other hand, in the second production method, steaming and flaking are performed after cutting. In this case, since the cut surface is rolled out by flaking, it is possible to obtain a processed grain food material having a higher water absorbency than that of the processed grain food material obtained by the first production method. In order to obtain a desired appearance, texture, and glutinous texture in the cooked rice-like meal, it is possible to appropriately select from a processed grain food material obtained by the first production method, which has low water absorbency, and a processed grain food material obtained by the second production method, which has high water absorbency, and thus, the appearance, texture, and glutinous texture of the cooked rice-like meal can be adjusted to desired degrees.

### (2. Processed grain food material)

The processed grain food material of the present invention is used for preparing a cooked rice-like meal by adding water to the processed grain food material and cooking the processed grain food material by heating, and has the following features.
- The processed grain food material being obtained by steaming, flaking, and cutting grain having been shed and polished;
- The processed grain food material having a thickness of 0.4 to 1.2 mm; and
- The processed grain food material having a moisture content of 20% or less. Note that the details of the grain, cooked rice-like meal, steaming, flaking, cutting, and the like are the same as described above.

The processed grain food material of the present invention has a thickness of 0.4 to 1.2 mm and the moisture content thereof is adjusted to 20% or less, from the viewpoint of obtaining a cooked rice-like meal (described later) having a preferable appearance, texture, and glutinous texture similar to those of cooked rice. The moisture content is adjusted to preferably 150 or less, and more preferably 14% or less.

### (3. Cooked rice-like meal)

The cooked rice-like meal of the present invention is prepared by adding water to the processed grain food material of the present invention and cooking the processed grain food material by heating (described later), and has the following features.
- The cooked rice-like meal does not substantially contain a grain source other than the processed grain food material of the present invention; and
- The cooked rice-like meal has an appearance, texture, and glutinous texture similar to those of cooked rice.

Note that specifically, the cooked rice-like meal of the present invention is a food that is eaten like cooked rice (so-called " cooked rice" (including packed rice)), a rice ball, fried rice, risotto, doria, and the like, and also includes a refrigerated product or a frozen product.

The cooked rice-like meal of the present invention does not substantially contain a grain source other than the processed grain food material of the present invention. The phrase "not substantially containing" means that grains (oat, barley, wheat, brown rice, and the like) other than the processed grain food material of the present invention are not added in an amount that functions as a grain source (oat, barley, wheat, brown rice, and the like) of the cooked rice-like meal. However, this does not exclude the presence of grains other than the processed grain food material of the present invention for purposes such as flavoring and color adjustment.

The cooked rice-like meal of the present invention has an appearance, texture, and glutinous texture similar to those of cooked rice. The phrase "appearance, texture, and glutinous texture similar to those of cooked rice" means that when the cooked rice-like meal according to the present invention is eaten, the cooked rice-like meal has an appearance, texture, and glutinous texture similar to or comparable to those of cooked rice, and the cooked rice-like meal has an appearance, texture, and glutinous texture enough to be enjoyed as a food similar to or comparable to those of cooked rice. More specifically, the term "appearance" means that "the graininess and grain texture peculiar to cooked rice can be visually recognized", the term "texture" means" that "when the cooked rice-like meal is eaten, the cooked rice-like meal has a texture including a moderate doughy texture peculiar to cooked rice", and the term "glutinous texture" means that "when the cooked rice-like meal is eaten, the glutinous texture peculiar to cooked rice is felt, and when the cooked rice-like meal is cooked as fried rice, flaky texture (texture in which grains are separated without sticking each other) is felt". Herein, the term "cooked rice" means general cooked rice which is obtained by cooking white rice in a rice cooker or the like and in which starch has been gelatinized, so-called "cooked rice" that Japanese usually eat.

### (4. Method for producing cooked rice-like meal)

The method for producing a cooked rice-like meal of the present invention includes a step of adding water to the processed grain food material of the present invention and cooking the processed grain food material by heating.

The amount of water to be added to the processed grain food material of the present invention may be, for example, 150 to 300 parts by mass based on 100 parts by mass of the processed grain food material. The amount of water to be added can be appropriately selected in consideration of the type of the grain, the type of the cooked rice-like meal, and the like.

Specific examples of the method for cooking the processed grain food material by heating include a method of adding a predetermined amount of water to the processed grain food material and heating the mixture in a microwave oven, but the heating method is not limited thereto, and includes frying, grilling, boiling, deep frying, steaming, and the like. As for the heating time, when the mixture is heated in a microwave oven, for example, heating may be performed at an output of 500 to 600 W for 1 to 3 minutes. The heating time can be appropriately selected in consideration of the type of the grain, the type of the cooked rice-like meal, and the like.

A specific example of the method for producing a cooked rice-like meal of the present invention will be described below.

### [Case of eating like cooked rice]

In a deep container, 30 g of the processed grain food material of the present invention and 70 mL of water are placed, and the mixture is stirred lightly in order to allow moisture to penetrate the processed grain food material. The mixture is heated in a microwave oven (500 to 600 W) for 2 minutes and 30 seconds without covering the container with food wrap. After the heating, the resulting rice-like meal is stirred lightly and eaten as "cooked rice" as it is. In this case, in order to simulate the appearance, texture, and glutinous texture of cooked rice, for example, the thickness of flaking of the grain may be set to a desired level, and the number of cuts may be increased or the width of cutting may be narrowed in order to obtain appropriate glutinous texture.

### [Case of eating as rice ball shape]

In a deep container, 30 g of the processed grain food material of the present invention and 70 mL of water are placed, and the mixture is stirred lightly in order to allow moisture to penetrate the processed grain food material. The mixture is heated in a microwave oven (500 to 600 W) for 2 minutes and 30 seconds without covering the container with food wrap. After the heating, an appropriate amount of salt or amino acid seasoning and a few drops of sesame oil are added, and the mixture is lightly stirred and then formed into a shape of a rice ball (ingredients of a rice ball may be put in a central portion). In this case, in order to maintain the texture and provide appropriate glutinous texture even after the rice ball is cooled after cooking, the thickness of flaking of the grain may be set to be thinner than that in the case of "eating like cooked rice" described above, the number of cuts may be increased, or the width of cutting may be

### further narrowed.

### [Case of eating as fried rice]

In a deep container, 30 g of the processed grain food material of the present invention and 50 to 60 mL of water are placed, and the mixture is stirred lightly in order to allow moisture to penetrate the processed grain food material. The mixture is heated in a microwave oven (500 to 600 W) for 2 minutes without covering the container with food wrap. After the heating, the resulting rice-like meal is allowed to cool down, and ingredients and seasoning for fried rice are added and cooked in a frying pan or the like. In this case, in order to obtain the flaky texture peculiar to fried rice, the thickness of flaking of the grain may be set to be thicker than that in the case of "eating like cooked rice" described above, and the number of cuts may be reduced or the width of cutting may be further widened.

### (5. Summary)

As described above, according to the present invention, it is possible to provide a processed grain food material for preparing a cooked rice-like meal, which is specialized in simulating the appearance, texture, and glutinous texture of cooked rice, and a method for producing the same, and a cooked rice-like meal which has an appearance, texture, and glutinous texture similar to those of cooked rice and does not substantially contain a grain source other than the processed grain food material, and a method for producing the same.

Conventionally, when oatmeal is made into rice-like meal to simulate cooked rice, two types of rolled type oatmeal and instant type oatmeal are mixed. Since the rolled type oatmeal and instant type oatmeal are not originally specialized for the purpose of cooking for simulating cooked rice, there is a limit to simulating the appearance, texture, and glutinous texture of the cooked rice, and it is also difficult to adjust the appearance, texture, and glutinous texture to desired degrees. According to the present invention, it is possible to simulate the appearance, texture, and glutinous texture similar to or comparable to those of cooked white rice, and it is also possible to adjust the appearance, texture, and glutinous texture of the cooked rice-like meal to desired degrees by changing the thickness of flaking of the grain, the cut size, the conditions of steaming, and the like. Thus, according to the present invention, a new food field called a cooked rice-like meal as staple food using grain rich in dietary fiber and other nutrients is developed.

Conventionally, when oatmeal is made into rice-like meal to simulate cooked rice, it is necessary to mix two types of rolled type oatmeal and instant type oatmeal, but according to the present invention, it is possible to provide a cooked rice-like meal that can be eaten simply and in a short time like cooked rice without cooking rice. Even in the unit of a bowl, by adding a small amount of water to the processed grain food material and heating the mixture in a microwave oven or the like for a short time, it is possible to simply cook a cooked rice-like meal having an appearance, texture, and glutinous texture like cooked white rice.

According to the present invention, it is possible to obtain a processed grain food material suitable for each type of the cooked rice-like meal by changing the thickness of flaking of the grain, the cut size, the conditions of steaming, and the like according to the type of desired cooked rice-like meal such as those eaten like cooked rice (so-called " cooked rice" (including packed rice), a rice ball, fried rice, risotto, and doria. In this way, the thickness of flaking of the grain, the cut size, the conditions of steaming, and the like can be adjusted according to the type of the cooked rice-like meal to be produced.

According to the present invention, a cooked rice-like meal using grain can be obtained by simple cooking by heating. Although the opportunity to take in dietary fiber from staple foods has been reduced due to the change in dietary habits in Japan, according to the present invention, the dietary fiber of the grain can be easily taken from staple foods. In addition, even in the unit of a bowl, a cooked rice-like meal can be simply obtained instantly without the trouble of cooking rice, and thus a large demand is expected in a wide range of age groups such as a single household and a workplace. In addition, the "ready-made meal" to be purchased at convenience stores, supermarkets, and the like tends to be selected with attention not only on the taste but also on the nutrition and whether it gives long-lasting feeling of fullness due to the recent increase in food consciousness. The cooked rice-like meal according to the present invention uses grain such as oat, barley, wheat, and brown rice, and thus is rich in dietary fiber and other nutrients and gives long-lasting feeling of fullness. Accordingly, demand for rice balls of the cooked rice-like meal, and the like is expected in the ready-made meal field. As described above, the present invention is expected to spread as a substitute for various existing cooked rice products and contribute to improvement in healthy life of a wide generation.

### EXAMPLES

Hereinafter, the present invention will be specifically described with reference to Examples. However, the present invention is not limited to these Examples.

### (Example 1)

Oats were charged in a shedding machine, the hull thereof was removed (shed), and then the oats were polished by a polishing machine. The polished oats were boiled (steamed) with steam (100°C) for several tens of minutes, and then flaked to a thickness of 0.9 mm with a heated flaking roller. Thereafter, the flaked oats were dried by hot air drying to a moisture content of 14% or less, and cut into 4 pieces using a cutting machine to obtain an processed oat food material (processed grain food material).

The processed oat food material (processed grain food material) obtained as described above was cooked by heating as follows.

### [Food eaten like cooked rice (cooked rice)]

In a deep container, 30 g of the processed grain food material and 70 mL of water were placed, and the mixture was stirred lightly in order to allow moisture to penetrate the processed grain food material. The mixture was heated in a microwave oven (500 to 600 W) for 2 minutes and 30 seconds without covering the container with food wrap. After the heating, the resulting rice-like meal was stirred lightly to obtain a cooked rice-like meal as cooked rice.

The appearance of the cooked rice-like meal as cooked rice obtained as described above was slightly light brown, but the graininess peculiar to the cooked rice was observed. When the cooked rice-like meal was eaten as cooked rice as it was, the appearance, texture, and glutinous texture were similar to or comparable to those of cooked white rice.

### [Rice ball]

In a deep container, 30 g of the processed grain food material and 70 mL of water were placed, and the mixture was stirred lightly in order to allow moisture to penetrate the processed grain food material. The mixture was heated in a microwave oven (500 to 600 W) for 2 minutes and 30 seconds without covering the container with food wrap. After the heating, an appropriate amount of salt or amino acid seasoning and a few drops of sesame oil were added, and the mixture was lightly stirred, and then formed into a rice ball shape to obtain a cooked rice-like meal as a rice ball.

When the rice ball obtained as described above was eaten after it was cooled, the appearance, texture, and glutinous texture were similar to or comparable to those of a rice ball made of white rice.

### [Fried rice]

In a deep container, 30 g of the processed grain food material and 50 to 60 mL of water were placed, and the mixture was stirred lightly in order to allow moisture to penetrate the processed grain food material. The mixture was heated in a microwave oven (500 to 600 W) for 2 minutes without covering the container with food wrap. After the heating, the resulting rice-like meal was allowed to cool down, and ingredients and seasoning for fried rice were added and cooked in a frying pan to obtain a cooked rice-like meal as fried rice.

When the cooked rice-like meal as fried rice obtained as described above was eaten, it was confirmed that the resulting fried rice had an appearance and texture similar to or comparable to those of fried rice using white rice, as well as a flaky texture similar to that of fried rice using white rice.

The above result shows that in the cooked rice-like meal as cooked rice, rice ball, and fried rice according to the present example, an appearance, texture, and glutinous texture similar to or comparable to those of white rice are realized.

### (Example 2)

### (Sensory test of cooked rice)

Oats were charged in a shedding machine, the hull thereof was removed (shed), and then the oats were polished by a polishing machine. The polished oats were boiled (steamed) with steam (100°C) for several tens of minutes, and then flaked to a thickness of 0.9 mm with a heated flaking roller. Thereafter, the flaked oats were dried by hot air drying to a moisture content of 14% or less, and cut into 2 to 3 pieces using a cutting machine to obtain an processed oat food material (processed grain food material).

In a deep container, 30 g of the processed oat food material obtained as described above and 70 mL of water were placed, and the mixture was stirred lightly in order to allow moisture to penetrate the processed oat food material. The mixture was heated in a microwave oven (500 to 600 W) for 2 minutes and 30 seconds without covering the container with food wrap. After the heating, the resulting rice-like meal was stirred lightly to obtain a cooked rice-like meal as cooked rice.

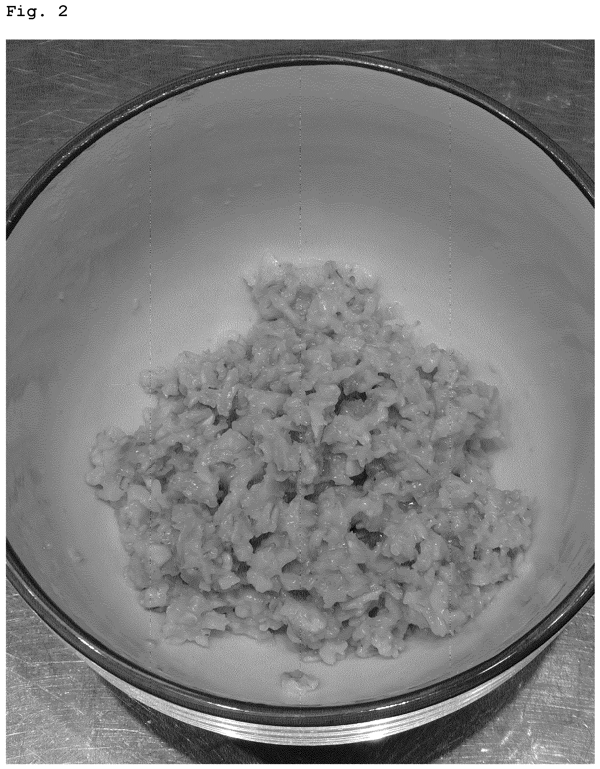

The cooked rice-like meal as cooked rice obtained as described above was used in the following sensory test. A photograph of the cooked rice of Example after cooking is shown in Fig. 2.

According to the following scoring criteria, four panelists conducted a sensory test by eating the cooked rice-like meal as cooked rice. As a control, general cooked white rice was used. The evaluation items were five items of "appearance (whether or not graininess and grain texture peculiar to cooked rice are visually recognized)", "aroma (whether or not appetite is stimulated)", "taste (whether or not teste is good as staple food)", "texture", and "glutinous texture". The scores of the four panelists were summed up, and the average score was calculated for each evaluation item.
5 points: equivalent to control
4 points: slightly different from control
3 points: rather different from control
2 points: different from control
1 point: greatly different from control

The results of the sensory test are shown in Table 1. In all the items of "appearance", "aroma", "taste", "texture", and "glutinous texture", the average score was 4 points (slightly different from the control) or more, which was similar to or comparable to the cooked white rice of the control.

**[Table 1]**

| | Panelist 1 | Panelist 2 | Panelist 3 | Panelist 4 | Average score |
|---|---|---|---|---|---|
| Appearance | 5 | 4 | 3 | 5 | 4.3 |
| Aroma | 5 | 4 | 4 | 4 | 4.3 |
| Taste | 4 | 5 | 4 | 5 | 4.5 |
| Texture | 5 | 4 | 3 | 4 | 4.0 |
| Glutinous texture | 5 | 5 | 4 | 4 | 4.5 |

In addition, a general oatmeal rice (cooked rice-like oatmeal) prepared by mixing two types of instant type oatmeal and rolled type oatmeal was used as a control, and a sensory test was performed in the same manner as described above. As for the method for preparing the control, more specifically, 23 g of instant type oatmeal (trade name: Premium Pure Instant Oatmeal, manufactured by Nippon food manufacturer), 7 g of rolled type oatmeal (trade name: Traditional Style (Rolled) Oatmeal, manufactured by Nippon food manufacturer), and 50 mL of water were placed in a deep container, and the mixture was lightly stirred in order to allow moisture to penetrate the oatmeal. The mixture was heated in a microwave oven (500 W) for 1 minute and 30 seconds without covering the container with food wrap. After the heating, the resulting rice-like meal was stirred lightly to obtain an oatmeal rice as a control.

As a result of the sensory test, the average score for the evaluation items of "appearance" was "3.3", indicating that the cooked rice of the present example had a difference in appearance from the oatmeal rice as a control. Specifically, the panelists evaluated that the rice of the present example had "grain texture, and was closer to real rice", that is, the cooked rice of the present example was evaluated as "being closer to real cooked rice".

As for the evaluation item of "aroma", all the panelists rated "5 points: equivalent to control", indicating that the cooked rice of the present example had an aroma equivalent to that of the oatmeal rice as a control.

The average score for the evaluation item "taste" was "4.3", indicating that the cooked rice of the present example had a slight difference in taste from the oatmeal rice as a control. Specifically, the panelists evaluated that the cooked rice of the present example was "flavorful and delicious" and "thicker in taste than oatmeal rice".

The average score for the evaluation item of "texture" was "1.8", indicating that the cooked rice of the present example had a considerable difference in texture from the oatmeal rice as a control. Specifically, the panelists evaluated that the cooked rice of the present example had "no mushy texture like the oatmeal rice as a control, and was close to real cooked rice", "had a texture close to that of cooked white rice even when cooled (even after being left for a predetermined time)", "had chewy texture more than the oatmeal rice as a control" and "had grain texture and gave strong feeling of eating rice".

The average score for the evaluation item of "glutinous texture" was "2.0", indicating that the cooked rice of the present example had a considerable difference in glutinous texture from the oatmeal rice as a control. Specifically, the panelists evaluated that the cooked rice of the present example "had less glutinous texture than the oatmeal rice as a control, and was closer to cooked white rice" "had a texture close to that of cooked white rice even when cooled (even after being left for a predetermined time)", "had less glutinous texture than the oatmeal rice as a control, and the grains were independent", and "the oatmeal rice as a control had a dumpling shape, whereas the cooked rice of the present example had a balance between glutinous texture and grain texture close to that of cooked white rice".

The above result shows that the cooked rice-like meal as cooked rice of the present example is similar to or comparable to general cooked white rice in "appearance", "aroma", "taste", "texture", and "glutinous texture", and can be eaten similarly to cooked rice. The above result also shows that in the cooked rice-like meal as cooked rice of the present example, "appearance", "texture" and "glutinous texture" are closer to those of cooked white rice than conventional oatmeal rice and "taste" is also better.

### (Example 3)

### (Sensory test of rice ball)

Oats were charged in a shedding machine, the hull thereof was removed (shed), and then the oats were polished by a polishing machine. The polished oats were boiled (steamed) with steam (100°C) for several tens of minutes, and then flaked to a thickness of 0.9 mm with a heated flaking roller. Thereafter, the flaked oats were dried by hot air drying to a moisture content of 14% or less, and cut into 2 to 3 pieces using a cutting machine to obtain an processed oat food material (processed grain food material).

In a deep container, 30 g of the processed oat food material obtained as described above and 70 mL of water were placed, and the mixture was stirred lightly in order to allow moisture to penetrate the processed oat food material. The mixture was heated in a microwave oven (500 to 600 W) for 2 minutes and 30 seconds without covering the container with food wrap. After the heating, an appropriate amount of salt or amino acid seasoning and a few drops of sesame oil were added, and the mixture was lightly stirred, and then formed into a rice ball shape to obtain a cooked rice-like meal as a rice ball.

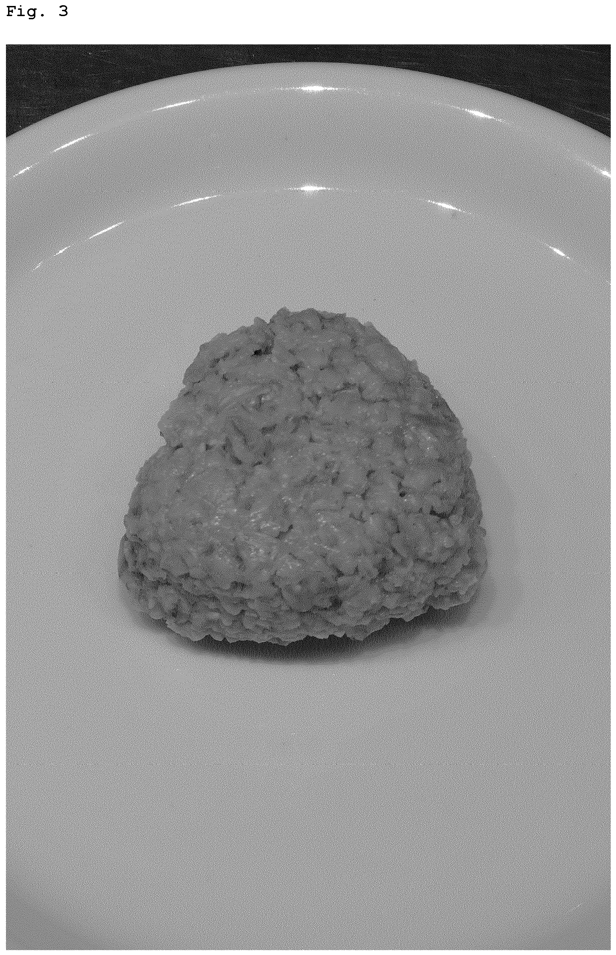

The cooked rice-like meal as a rice ball obtained as described above was used in the following sensory test. A photograph of the rice ball of Example after cooking is shown in Fig. 3.

According to the following scoring criteria, four panelists conducted a sensory test by eating the cooked rice-like meal as a rice ball after cooling the rice ball. As a control, a rice ball of general white rice after cooling was used. The evaluation items and the calculation method are the same as those in Example 2.

The results of the sensory test are shown in Table 2. In "taste", all the panelists rated "5 points: equivalent to control". As for "appearance", "aroma", "texture", and "glutinous texture", the average score was 4 points (slightly different from the control) or more, and the result was similar to or comparable to the rice ball of the control.

**[Table 2]**

| | Panelist 1 | Panelist 2 | Panelist 3 | Panelist 4 | Average score |
|---|---|---|---|---|---|
| Appearance | 5 | 4 | 3 | 5 | 4.3 |
| Aroma | 5 | 5 | 4 | 5 | 4.8 |
| Taste | 5 | 5 | 5 | 5 | 5.0 |
| Texture | 4 | 4 | 4 | 4 | 4.0 |
| Glutinous texture | 4 | 5 | 4 | 4 | 4.3 |

The above result shows that the cooked rice-like meal as a rice ball of the present example has "taste" equivalent to that of general cooked white rice as well as "appearance", "aroma", "texture", and "glutinous texture" similar to or comparable to those of white rice, and thus can be eaten similarly to a general rice ball of cooked white rice.

### (Example 4)

### (Sensory test of fried rice)

Oats were charged in a shedding machine, the hull thereof was removed (shed), and then the oats were polished by a polishing machine. The polished oats were boiled (steamed) with steam (100°C) for several tens of minutes, and then flaked to a thickness of 0.9 mm with a heated flaking roller. Thereafter, the flaked oats were dried by hot air drying to a moisture content of 14% or less, and cut into 2 to 3 pieces using a cutting machine to obtain an processed oat food material (processed grain food material).

In a deep container, 30 g of the processed oat food material obtained as described above and 50 to 60 mL of water were placed, and the mixture was stirred lightly in order to allow moisture to penetrate the processed oat food material. The mixture was heated in a microwave oven (500 to 600 W) for 2 minutes without covering the container with food wrap. After the heating, the resulting rice-like meal was allowed to cool down, and ingredients and seasoning for fried rice were added and cooked in a frying pan to obtain a cooked rice-like meal as fried rice.

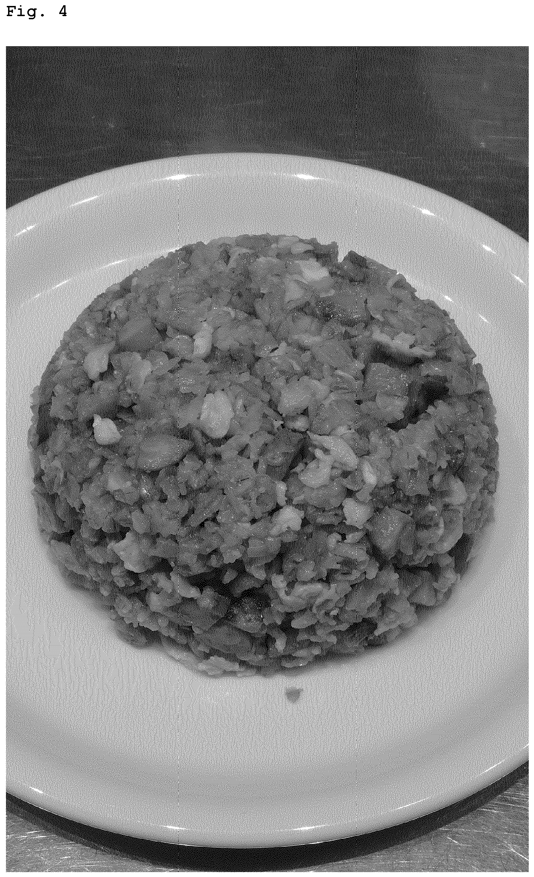

The cooked rice-like meal as fried rice obtained as described above was used in the following sensory test. A photograph of the fried rice of Example after cooking is shown in Fig. 4.

According to the following scoring criteria, four panelists conducted a sensory test by eating the cooked rice-like meal as fried rice. As a control, fried rice cooked using general cooked white rice was used. The evaluation items were five items of "appearance (whether or not graininess and grain texture peculiar to fried rice using cooked rice are visually recognized)", "aroma (whether or not the aroma of oatmeal is noticeable)", "taste (whether or not teste is good as fried rice)", "texture", and "flaky texture". The scores of the four panelists were summed up, and the average score was calculated for each evaluation item.
5 points: equivalent to control
4 points: slightly different from control
3 points: rather different from control
2 points: different from control
1 point: greatly different from control

The results of the sensory test are shown in Table 3. All the panelists rated "5 points: equivalent to control" in "appearance", "aroma", "taste", and "flaky texture". As for the "texture", 4.8 points were obtained, which was close to the value of "5 points: equivalent to control".

**[Table 3]**

| | Panelist 1 | Panelist 2 | Panelist 3 | Panelist 4 | Average score |
|---|---|---|---|---|---|
| Appearance | 5 | 5 | 5 | 5 | 5.0 |
| Aroma | 5 | 5 | 5 | 5 | 5.0 |
| Taste | 5 | 5 | 5 | 5 | 5.0 |
| Texture | 5 | 5 | 5 | 4 | 4.8 |
| Flaky texture | 5 | 5 | 5 | 5 | 5.0 |

The above result shows that the cooked rice-like meal as fried rice of the present example has "appearance", "aroma", "taste", and "flaky texture" equivalent to those of general fried rice using cooked white rice as well as "texture" similar to the general fried rice, and thus can be eaten similarly to general fried rice using cooked white rice.

Note that various embodiments and modifications can be made without departing from the spirit and scope of the present invention in a broad sense. In addition, the above-described embodiments are for describing the present invention, and do not limit the scope of the present invention. That is, the scope of the present invention is defined not by the embodiments but by the claims. Various modifications made within the scope of the claims and the meaning of the invention equivalent thereto are regarded as being within the scope of the present invention.

The present invention is based on Japanese Patent Application No. 2022-14151 filed on February 1, 2022. The entire specification, claims, and drawings of Japanese Patent Application No. 2022-14151 are incorporated herein by reference.

## Claims

1. A processed grain food material for preparing a cooked rice-like meal by adding water to the processed grain food material and cooking the processed grain food material by heating, the processed grain food material having the following features a) to e):
a) the processed grain food material being obtained by steaming, flaking, and cutting grain that has been shed and polished;
b) the processed grain food material having a thickness of 0.4 to 1.2 mm;
c) the processed grain food material having a moisture content of 20% or less;
d) the cooked rice-like meal containing substantially no grain source other than the processed grain food material; and
e) the cooked rice-like meal having an appearance, a texture, and a glutinous texture similar to an appearance, a texture, and a glutinous texture of cooked rice.

2. A method for producing the processed grain food material according to claim 1, the method comprising:
a steaming step of steaming grain having been shed and polished;
a flaking step of flaking the grain having been steamed in the steaming step to a thickness of 0.4 to 1.2 mm; and
a step of drying the grain having been flaked in the flaking step to obtain a processed grain food material having a moisture content of 20% or less, wherein
the grain having been dried is cut, or
in the steaming step, the grain having been shed and polished is cut, and then steamed.

3. The method according to claim 2, wherein the grain is cut into 2 to 15 pieces.

4. A method for producing a cooked rice-like meal,
the method comprising a step of adding water to the processed grain food material according to claim 1 and cooking the processed grain food material by heating,
wherein the cooked rice-like meal contains substantially no grain source other than the processed grain food material, and has an appearance, a texture, and a glutinous texture similar to an appearance, a texture, and a glutinous texture of cooked rice.

5. A cooked rice-like meal comprising the processed grain food material according to claim 1, wherein
the cooked rice-like meal contains substantially no grain source other than the processed grain food material, and has an appearance, a texture, and a glutinous texture similar to an appearance, a texture, and a glutinous texture of cooked rice.
